# EUROPEAN PATENT SPECIFICATION

(11) **EP 0 896 332 B1**
(45) Date of publication and mention of the grant of the patent: **04.06.2008**
(21) Application number: 98401777.2
(22) Date of filing: 15.07.1998
(51) Int. Cl.: G11B 23/40, G11B 7/24, G11B 7/26

(54) **A method for personalizing a data storage medium**
Verfahren zur personifizierung vom Datenspeichermedium
Méthode de personnalisation d'un support de stockage de données

(30) Priority: 28.07.1997 EP 97401801
(43) Date of publication of application: 10.02.1999
(73) Proprietor: THOMSON multimedia, 92100 Boulogne Billancourt (FR)
(72) Inventor: Koyama, Hirofumi c/o Thomson Multimedia, Lic.& IP, 92648 Boulogne (FR)
(74) Representative: Zhang, Jianguo

(56) References cited:
- EP-A- 0 329 122
- EP-A- 0 682 341
- EP-A- 0 762 407
- GB-A- 2 277 827
- US-A- 4 967 286
- US-A- 5 608 718

## Description

The invention relates to a method for personalizing a data storage medium. At least one property of a non recorded data area is modified thereby creating determined patterns on or in the data storage medium. The invention also relates to a data storage medium which carries such determined patterns, and to a device for transferring such determined patterns on or in the data storage medium.

A data storage medium is commonly used to store data in its specific data areas. Recording data in these data areas often results in the modification of at least one property where data is recorded, i.e. a modification of a physical property. Eventually the modifications lead to a coded representation in the data areas, e.g. in binary or analog code, of the data to record. The property to change depends on the nature of the data storage medium used. The property may for example be a magnetization if the data storage medium is a magnetic tape or disc, or a physical deformation of a surface in case of an optical disk. In the latter case the data is typically stored along concentric or spiral tracks which define a recorded data area of the disc having different optical properties than non recorded data areas, e.g. a modified reflectance. The difference between non recorded and recorded data areas may be seen through the eyes of a user.

In order to label a data storage medium, such that a user may identify the data storage medium by reading the label with his eye, it is known to print a label on information areas of the data storage medium not designed as data areas to record data. The patent US 5,317,337, Ewaldt, shows an apparatus for printing label information in the form of graphics and/or characters on a disk shaped information carrier. The label information is prepared by a data processing system and transferred to a printer. The printer prints the label information directly on an information area. The apparatus for printing is distinct from an apparatus used for recording data in data areas. As a consequence, two distinct operations, namely printing and recording are required when producing a recorded data storage medium.

US-A-4 967 286 shows an example of adding a pattern directly in the recording layer using a master.

It is an object of the present invention to find a way for simply personalizing a data storage medium without using a separate apparatus for printing.

A solution to the mentioned problem is according to the present invention found in a method for personalizing a recordable data storage medium a defined in claim 1 which comprises a step of modifying at least one property of non recorded data areas of the data storage medium to store data and a step of creating a determined pattern by further using said step of modifying the property of determined non recorded data areas.

An advantage of the method according to the invention is that a device normally used for recording data in data areas may now also be used for labeling the data storage medium with determined patterns. The need for a separate apparatus for printing is eliminated. More precisely there is no need for a data storage medium mastering device.

Another advantage of the method according to the invention is that it may be used in consumer devices with which the consumer may personalize every single data storage medium he/she records.

According to the present invention the step of modifying changes an optical property of the non recorded data areas.

The modifying of optical properties makes it possible for a user to identify the optical medium using his eyes in a similar manner as if the label comprising the determined patterns would have been printed using ink.

In a preferred embodiment of the method according to the invention residual non recorded data areas on the data storage medium are determined and a scheme to modify said residual non recorded data areas according to the determined patterns is planned. The scheme is then transfered on said residual non recorded data areas.

The latter preferred embodiment takes in account the space available for creating the determined patterns on the storage medium. Typically this may be done after recording data in the data areas. The determined patterns may be varied in their size and in their number.

Another solution to the above mentioned problem is according to the invention seen in a data storage medium according to claim 3 on or in which data is represented by data areas which have at least one property different from that of a non recorded data area. The data storage medium comprises determined data areas representing determined patterns and having said one property different from that of a non recorded data area.

Depending on the use of the data storage medium, different properties may be chosen to be modified. This may depend on means available to identify the modified property. The means may be of sensory nature, e.g. touching, or perhaps of optical nature, e.g. a camera or a human eye.

A data storage medium according to the invention may be disk shaped.

The invention provides a simple way to realize user defined patterns on write once or rewritable optical discs.

The invention will now be explained in more details using examples and with reference to the drawings, in which :
FIG. 1 is a diagrammatic upper view of a disk shaped data storage medium;
FIG. 2 is a diagrammatic view of a recorded data area and a determined pattern on the data storage medium shown in Fig. 1;
FIG. 3 shows a flowchart for use in a device;
FIG. 4 is a diagrammatic view of a device;
FIG. 5 shows a device.

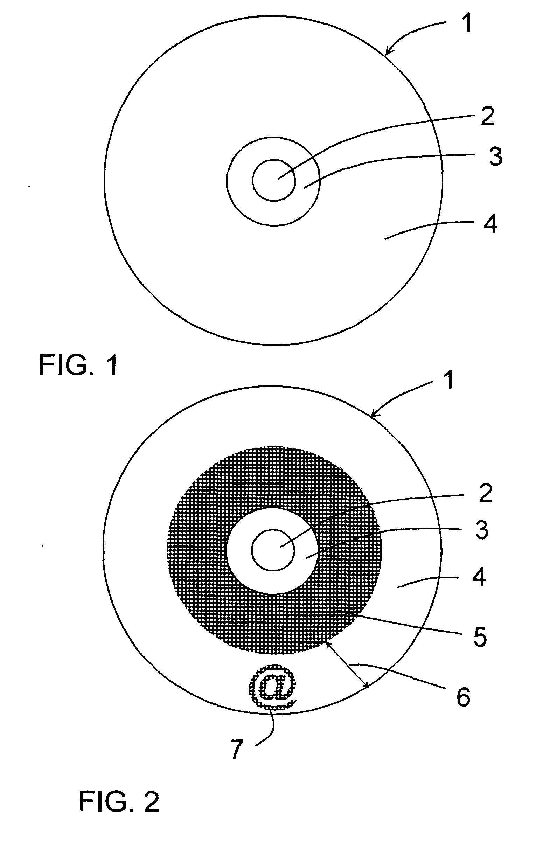

A disk shaped data storage medium 1 shown in FIG. 1 comprises a central opening 2 for a driving unit, an annular area 3 surrounding the opening 2 and an annular data area 4 designed to store data. The data storage medium 1 is empty which means that no data is stored in the data area 4. The data storage medium 1 may for example be an optical disk which is readable using a light source and an optical reading head (not shown).

Data is stored on the data storage medium 1 in concentric or spiral tracks (not shown) departing from an outer periphery of the annular area 3. In FIG. 2 an annular area 5 of recorded data increases its radial width towards an outer periphery of the data area 4 as more data is recorded. The recording of data in the data area 4 causes a modification of an optical property thereof. The modified optical property of the optical disk may for example be the reflectance of a surface defined by the data area 4. This means that recorded data areas of the data area 4 will reflect electromagnetic, more precisely optomagnetic radiation in a different way than non recorded data areas. Therefore, a reflectance of the annular area 5 of recorded data is different from that of a non recorded data area having a radial width 6. This allows a user to distinguish with his eyes the annular area 5 of recorded data from the non recorded data area having the radial width 6. The same kind of modification caused by recording data is used to create the determined pattern 7, i.e. @ in the non recorded data area of the data area 4. For the reasons depicted above, namely the modified reflectance, the determined pattern 7 may be viewed from a user through his eyes. The determined pattern 7 is a modified data area delimited by adjacent non recorded data areas. For the sake of labeling the data storage medium 1 with patterns visible through user's eyes, the information carried by the determined pattern 7 lies in its delimitation.

The data storage medium 1 may for example be a write once disk better known as a WORM disk. Let us take an example of a CD-R disk. It reflects white light as green or blue light. Non recorded parts of the data area generally appear as dark green or dark blue whereas recorded parts become light green or light blue. A contrast between non recorded data areas and recorded data areas is approximately 0.7 to 1 and is clearly visible through eyes. The creating of determined patterns in non recorded data areas of the CD-R is simply done for example by additional laser scanning or by means of contact mask transferring.

Many other kinds of data storage media may be used for creating the determined patterns on or in them. As an example a multilayer optical disc in which the data area comprises a multiplicity of superposed layers to store data could reflect different colors depending on the layer. By modifying the reflectance of each layer appropriately it would be possible to mix colors in the reflected light and create colored determined patterns.

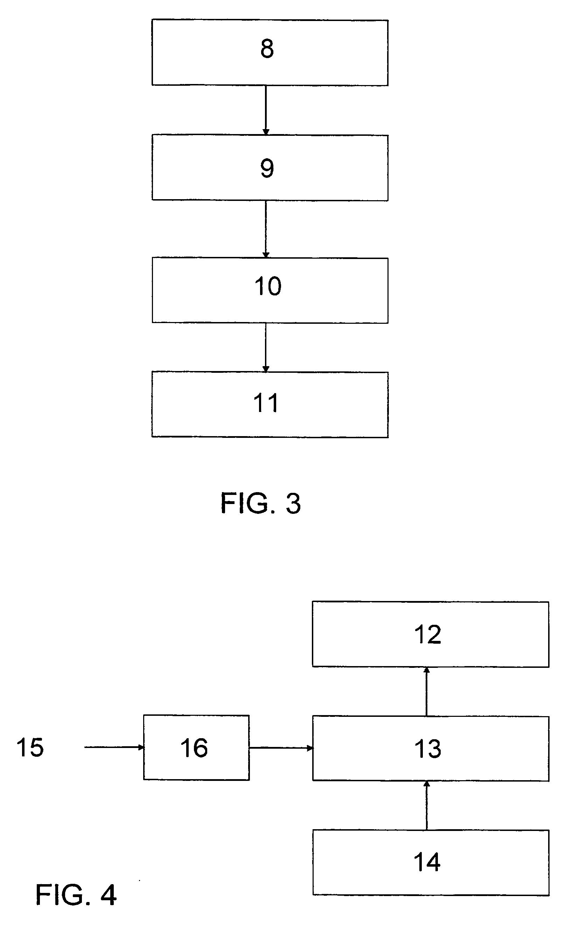

Determined patterns may be created on a data storage medium according to a flowchart shown in FIG. 3. In a box 8 residual non recorded data areas of the data storage medium are determined. These areas comprise for the data storage medium 1 shown in FIG. 2 the non recorded annular area of the data area 4, which has the radial width 6.

In box 9 the determined patterns are processed i.e. they may be inputted, shown on a display to the user, formatted etc... (not shown). Box 9 could of course also be placed before box 8. In box 10 an output of box 9 is converted to obtain a transfer format for the processed determined patterns. An output of box 10, i.e. the transfer format is transmitted to transferring means in box 11 which modify the residual non recorded data area in an appropriate way to make the determined patterns appear on the data storage medium.

The processing done in box 9 may for example be realized using a graphical data processing device (not shown) well known by a man skilled in the art. Graphical data processing devices typically use specialized software.

In many disk formats (WORM or recordable), the addresses determining the location on the disk are contained in performatted grooves in order to allow recording of data on the disk with high precision. One may use these addresses in the non recorded data area to obtain the transfer of the processed determined patterns on the data storage medium.

In FIG. 4 a diagrammatic view shows a device which is used to store data 14 on a data storage medium 12. Recording means 13 modify data areas (not shown) of the data storage medium 12 to store the data 14. Determined patterns 15 are processed using processing means 16 and processed determined patterns are transferred on the data storage medium 12 with the recording means 13.

The recording means 13 may be a part of the transferring means in box 11, and the processing means 16 may correspond to the boxes 8, 9 and 10 shown in FIG. 3.

As an example the recording means for a write once optical disk, e.g. a CD-R disk, comprise a laser with a relative high power output. On recording this laser illuminates a surface of organic dye layer and heats up the dye. A physical property of the dye is changed and pits representing data are formed, thus the data area is modified.

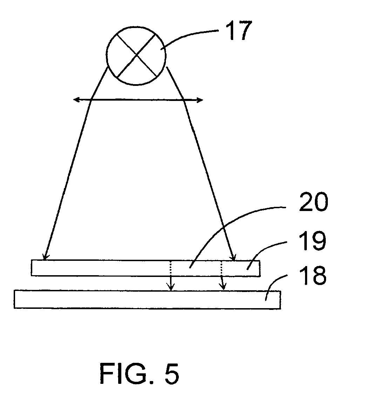

FIG. 5 schematically illustrates a side view of a device in which a radiation source 17 illuminates a data area of a data storage medium 18 through masking means 19. The masking means 19 have at least an opening 20 corresponding to determined patterns, these determined patterns being projected on or in the data storage medium 18. The data storage medium's data area is sensitive to the radiation emitted by the radiation source 17 and is modified according to a shape defined by the opening 20.

The masking means 19 may comprise a LCD shutter. In this case the LCD shutter may be externally controlled to variably create a plurality of determined patterns depending on a user's needs.

In a preferred embodiment of the above detailed examples the modification inside the data areas representing determined patterns may be made non homogeneously. The non homogeneous modification may for example result in a gradation of the modified property. Hence, if the modified property is the reflectance of the surface, the reflectance may be varied inside the determined patterns. The non homogeneous modification may for example be obtained by varying an amplitude of electromagnetic radiation absorbed by the surface. It may also be obtained by varying the duration of exposure of the data areas representing determined patterns to electromagnetic radiation.

## Claims

1. A method for personalizing a recordable data storage medium (1;12;18), having a multiplicity of superposed layers to store data comprising a step of modifying at least one optical property of non recorded data areas (4) of the data storage medium to store data, the method comprises a step of creating a determined pattern (7) by further using said step of modifying said property of determined non recorded data areas whereby said property of each layer is modified to reflect different colors depending on the layer.

2. A method according to claim 1 comprising the steps of
- determining (8) residual non recorded data areas on the recordable data storage medium,
- planning a scheme (9) to modify said residual non recorded data areas according to said determined pattern,
- transferring (10, 11) said scheme on said residual non recordable data areas.

3. A recordable data storage medium (1) having a multiplicity of superposed layers to store data on or in which data is represented in data areas which have at least one optical property different from that of a non recorded data area, the medium comprises determined data areas representing determined patterns (7) and having said one property different from that of a non recorded data area whereby said property of each layer is provided for being modified to reflect different colors depending on the layer.

## Patentansprüche

1. Verfahren zum Personalisieren eines beschreibbaren Datenspeichermediums (1; 12; 18;), eine Vielzahl von übereinander liegenden Schichten zum Speichern von Daten aufweisend, einen Schritt zum Verändern von mindestens einer optischen Eigenschaft von nicht beschriebenen Datenbereichen (4) des Datenspeichermediums zum Speichern von Daten umfassend, wobei das Verfahren einen Schritt zum Erzeugen eines bestimmten Musters (7) umfasst, indem weiterhin der Schritt zum Verändern der Eigenschaft von bestimmten nicht beschriebenen Datenbereichen verwendet wird, wobei die Eigenschaft von jeder Schicht verändert wird, damit abhängig von der Schicht unterschiedliche Farben reflektiert werden.

2. Verfahren nach Anspruch 1, die folgenden Schritte umfassend:
- Bestimmen (8) von verbleibenden nicht beschriebenen Datenbereichen auf dem beschreibbaren Datenspeichermedium,
- Planen eines Schemas (9), um die verbleibenden nicht beschriebenen Datenbereiche gemäß dem bestimmten Muster zu verändern,
- Übertragen (10, 11) des Schemas auf die verbleibenden nicht beschriebenen Datenbereiche.

3. Beschreibbares Datenspeichermedium (1), eine Vielzahl von übereinander liegenden Schichten zum Speichern von Daten aufweisend, auf dem oder in dem Daten in Datenbereichen dargestellt werden, welche mindestens eine optische Eigenschaft aufweisen, die sich von derjenigen eines nicht beschriebenen Datenbereichs unterscheidet, wobei das Medium bestimmte Datenbereiche umfasst, welche bestimmte Muster (7) darstellen und die eine Eigenschaft aufweisen, die sich von derjenigen eines nicht beschriebenen Datenbereiches unterscheidet, wobei die Eigenschaft von jeder Schicht bereitgestellt wird, um verändert zu werden, damit abhängig von der Schicht unterschiedliche Farben reflektiert werden.

## Revendications

1. Méthode de personnalisation d'un support de stockage de données enregistrable (1:12; 18) possédant une multiplicité de couches superposées pour stocker des données, comprenant une étape de modification d'au moins une propriété optique de zones de données non enregistrées (4) du support de stockage de données pour stocker des données, la méthode comprend une étape de création d'un modèle déterminé (7) à l'aide en outre de ladite étape de modification de ladite propriété de zones de données non enregistrées déterminées, où ladite propriété de chaque couche est modifiée afin de réfléchir des couleurs différentes en fonction de la couche.

2. Méthode selon la revendication 1, comprenant les étapes de
- détermination (8) de zones de données non enregistrées résiduelles sur le support de stockage de données enregistrable,
- planification d'un schéma (9) pour modifier lesdites zones de données non enregistrées résiduelles selon ledit modèle déterminé,
- transfert (10, 11) dudit schéma sur lesdites zones de données non enregistrées résiduelles,

3. Support de stockage de données enregistrable (1) possédant une multiplicité de couches superposées pour stocker des données, sur ou dans lequel des données sont représentées dans des zones de données comportant au moins une propriété optique différente de celle d'une zone de données non enregistrée, le support comprend des zones de données déterminées représentant des modèles déterminés (7) et possédant ladite une propriété différente de celle d'une zone de données non enregistrée, où ladite propriété de chaque couche est fournie pour être modifiée afin de réfléchir des couleurs différentes en fonction de la couche.
